# EUROPÄISCHE PATENTANMELDUNG

(11) **EP 4 124 510 A1**
(43) Veröffentlichungstag der Anmeldung: **01.02.2023**
(21) Anmeldenummer: 22182264.6
(22) Anmeldetag: 30.06.2022
(51) Int. Cl.: B60R 9/10

(54) **HECKTRÄGERSYSTEM**

(30) Priorität: 29.07.2021 DE 102021208200
(71) Anmelder: BOS Technology Services GmbH, 73760 Ostfildern (DE)
(72) Erfinder: Sang, Johannes, 55283 Nierstein (DE); Reichel, Johannes, 71254 Ditzingen (DE)
(74) Vertreter: Patentanwälte Ruff, Wilhelm, Beier, Dauster & Partner mbB

(57) **Zusammenfassung**

2.1 Ein derartiges Heckträgersystem zum Transport wenigstens eines Fahrrads, aufweisend ein Grundgestell, das zur vertikalen Montage an einer Heckwand eines Kraftfahrzeugs eingerichtet ist, wenigstens eine an dem Grundgestell angeordnete in Längsrichtung längserstreckte Aufnahmespur, entlang derer das zu transportierende Fahrrad an dem Grundgestell aufnehmbar ist, und aufweisend wenigstens eine an dem Grundgestell angeordnete Einhängeeinrichtung, die zum Einhängen eines Vorder- oder Hinterrads des wenigstens einen Fahrrads entlang der Aufnahmespur eingerichtet ist, ist bekannt.

2.2 Erfindungsgemäß weist die Einhängeeinrichtung einen lösbar mit dem Grundgestell verbundenen Basisteil und einen Bügelteil auf, der um eine im Wesentlichen in Querrichtung orientierte Schwenkachse schwenkbeweglich an dem Basisteil gelagert und relativ zu demselben beweglich ist zwischen einer Funktionsstellung, in welcher der Bügelteil zum Einhängen des Vorder- oder Hinterrads relativ zu dem Basisteil aufgestellt ist, und einer Nichtgebrauchsstellung, in welcher der Bügelteil kompakt an den Basisteil herangeschwenkt ist.

2.3 Einsatz bei einem Kraftfahrzeug.

## Beschreibung

Die Erfindung betrifft ein Heckträgersystem zum Transport wenigstens eines Fahrrads, aufweisend ein Grundgestell, das zur vertikalen Montage an einer Heckwand eines Kraftfahrzeugs eingerichtet ist, wenigstens eine an dem Grundgestell angeordnete in Längsrichtung längserstreckte Aufnahmespur, entlang derer das zu transportierende Fahrrad an dem Grundgestell aufnehmbar ist, und aufweisend wenigstens eine an dem Grundgestell angeordnete Einhängeeinrichtung, die zum Einhängen eines Vorder- oder Hinterrads des wenigstens einen Fahrrads entlang der Aufnahmespur eingerichtet ist.

Solche Heckträgersysteme sind insbesondere für Wohnmobile, Kleinbusse, Omnibusse oder sonstige Kraftfahrzeuge mit steil aufragender Heckwand bekannt. Das Grundgestell solcher Heckträgersysteme wird üblicherweise vertikal, d.h. steil aufragend, an der Heckwand des Kraftfahrzeugs montiert. Das wenigstens eine zu transportierende Fahrrad ist entlang einer geometrisch gedachten oder als Radschiene ausgebildeten Aufnahmespur an dem Grundgestell aufnehmbar. Die Aufnahmespur ist in Längsrichtung des Grundgestells längserstreckt. In einem an der Heckwand montierten Zustand ist die Aufnahmespur somit vertikal orientiert. Zum Einhängen des Vorder- oder Hinterrads des zu transportierenden Fahrrads weisen solche Heckträgersysteme oftmals einen relativ zu dem Grundgestell feststehenden Bügel auf, der üblicherweise fest mit dem Grundgestell verschraubt oder an dasselbe angeschweißt ist.

Aufgabe der Erfindung ist es, ein Heckträgersystem der eingangs genannten Art bereitzustellen, das gegenüber dem Stand der Technik verbesserte Eigenschaften aufweist und insbesondere einen verminderten Raumbedarf bei Nichtgebrauch des Heckträgersystems aufweist.

Diese Aufgabe wird dadurch gelöst, dass die Einhängeeinrichtung einen lösbar mit dem Grundgestell verbundenen Basisteil und einen Bügelteil aufweist, der um eine im Wesentlichen in Querrichtung orientierte Schwenkachse schwenkbeweglich an dem Basisteil gelagert und relativ zu demselben beweglich ist zwischen einer Funktionsstellung, in welcher der Bügelteil zum Einhängen des Vorder- oder Hinterrads relativ zu dem Basisteil aufgestellt ist, und einer Nichtgebrauchsstellung, in welcher der Bügelteil kompakt an den Basisteil herangeschwenkt ist. Durch die erfindungsgemäße Lösung nimmt das Heckträgersystem bei Nichtgebrauch vergleichsweise weniger Raum ein als dies bei bekannten Lösungen der Fall ist. Dies wird dadurch erreicht, dass der Bügelteil ausgehend von der Funktions- in die Nichtgebrauchsstellung verlagert werden kann. In der Nichtgebrauchsstellung ist der Bügelteil kompakt an den Basisteil herangeschwenkt. Zudem ist der Basisteil erfindungsgemäß lösbar mit dem Grundgestell verbunden. Bei Nichtgebrauch des Heckträgersystems kann die Einhängeeinrichtung somit von dem Grundgestell gelöst und separat von demselben aufbewahrt werden. Das Grundgestell kann derweil anderweitig, beispielsweise zum Transport sonstiger Lasten, verwendet werden. Dies geht mit zusätzlichen Vorteilen einher. Das Grundgestell ist bei unterschiedlichen Ausgestaltungen unterschiedlich ausgeführt. Beispielsweise kann das Grundgestell eine aus mehreren Rahmenabschnitten zusammengefügte Rahmenkonstruktion, eine flächig erstreckte Plattform oder dergleichen sein. Vorzugsweise weist das Grundgestell wenigstens eine Befestigungseinrichtung zur lösbaren Befestigung an der Heckwand des Kraftfahrzeugs auf. Im einfachsten Fall weist das Grundgestell mehrere Durchgangsbohrungen auf, die ein Verschrauben des Grundgestells mit der Heckwand ermöglichen. Das Grundgestell ist entlang seiner Längsrichtung längserstreckt. In einem bestimmungsgemäß montierten Montagezustand des Grundgestells ist dessen Längsrichtung wenigstens überwiegend vertikal orientiert, d.h. das Grundgestell ragt in seiner Längsrichtung entlang der Heckwand vertikal auf. Sofern die Heckwand parallel zur Hochrichtung des Kraftfahrzeugs orientiert ist, gilt dies im Montagezustand dementsprechend für die Längsrichtung des Grundgestells. Die wenigstens eine Aufnahmespur kann eine in Längsrichtung des Grundgestells erstreckte Spur im geometrischen Sinne und/oder durch ein physisch vorhandenes Bauteil gebildet sein. Bei einer Ausgestaltung ist die Aufnahmespur durch ein schienen- oder rinnenförmiges Bauteil gebildet. Bei einer weiteren Ausgestaltung ist die Aufnahmespur eine in Längsrichtung entlang des Grundgestells erstreckte gedachte Linie, entlang derer das zu transportierende Fahrrad an dem Grundgestell aufnehmbar und/oder in die Einhängeeinrichtung einhängbar ist. In eingehängtem Zustand ist eine Längsrichtung des zu transportierenden Fahrrads parallel zur Längsrichtung des Grundgestells und/oder der Aufnahmespur orientiert. Die Schwenkachse des Bügelteils ist wenigstens im Wesentlichen in Querrichtung des Grundgestells orientiert. Vorzugsweise ist die Schwenkachse parallel zur Querrichtung des Grundgestells orientiert. In dem besagten Montagezustand ist die Querrichtung des Grundgestells parallel zu einer Querrichtung des Kraftfahrzeugs. In dem Montagezustand ist die Hochrichtung des Grundgestells vorzugsweise parallel zur Längsrichtung des Kraftfahrzeugs orientiert. Der Bügelteil ist in der Funktionsstellung in Hochrichtung des Grundgestells aufgestellt und in der Nichtgebrauchsstellung in Hochrichtung kompakt an das Grundgestell herangeschwenkt. In Bezug auf den Montagezustand erlaubt die Verlagerung des Bügelteils in die Nichtgebrauchsstellung demnach einen verminderten Platzbedarf in Längsrichtung des Kraftfahrzeugs. Die lösbare Verbindung zwischen dem Basisteil und dem Grundgestell kann beispielsweise eine lösbare Rast-, Klemm-, Steck-, Schraub- und/oder Hakenverbindung sein.

In Ausgestaltung der Erfindung weist der Basisteil wenigstens einen Hakenabschnitt auf, mittels dessen die Einhängeeinrichtung an einem hierfür vorgesehenen Abschnitt des Grundgestells - in Bezug auf den Montagezustand - entgegen der Schwerkraft formschlüssig lösbar einhakbar ist. Hierdurch kann der Basisteil und damit die gesamte Einhängeeinrichtung auf besonders einfache Weise mit dem Grundgestell verbunden und von diesem gelöst werden. Bei einer Ausgestaltung ist die zwischen dem Hakenabschnitt und dem Abschnitt des Grundgestells ausgebildete lösbare Hakenverbindung gegen ein ungewolltes Lösen gesichert. Zur Sicherung kann beispielsweise eine Schraub- oder Bolzenverbindung vorgesehen sein. Die Hakenverbindung wirkt in Bezug auf die Längsrichtung des Grundgestells einseitig formschlüssig. In dem Montagezustand ist der Hakenabschnitt - in Bezug auf die Richtung des Erdschwerevektors und/oder die Hochrichtung des Kraftfahrzeugs - von oben nach unten auf den hierfür vorgesehenen Abschnitt des Grundgestells aufgehakt. Sofern keine gesonderte Sicherung der Hakenverbindung vorgesehen ist, kann der wenigstens eine Hakenabschnitt grundsätzlich ohne weiteres nach oben von dem hierfür vorgesehenen Abschnitt des Grundgestells enthakt werden. Bei einer bevorzugten Ausgestaltung weist der Basisteil zwei in Querrichtung voneinander beabstandet angeordnete Hakenabschnitte auf.

In weiterer Ausgestaltung der Erfindung weist das Grundgestell wenigstens eine in Querrichtung längserstreckte Sprosse auf, an deren Außenumfang der Hakenabschnitt lösbar einhakbar ist. Hierdurch wird ein einfaches Ausbilden und Lösen der Hakenverbindung gewährleistet. Zudem kann das Grundgestell wenigstens im Hinblick auf die besagte Hakenverbindung mit der Einhängeeinrichtung besonders einfach aufgebaut werden. Der Außenumfang der Sprosse ist vorzugsweise auf einen Innenumfang des wenigstens einen Hakenabschnitts abgestimmt. Vorzugsweise weist der Außenumfang einen rechteckigen Querschnitt auf und der Innenumfang des Hakenabschnitts ist hierzu komplementär gestaltet. Bei einer bevorzugten Ausgestaltung weist das Grundgestell eine leiterförmige Gestalt mit zwei in Längsrichtung des Grundgestells längserstreckten Holmen und mehreren in Querrichtung zwischen den Holmen längserstreckten und in Längsrichtung voneinander beabstandet angeordneten Sprossen auf. Hierdurch kann die Einhängeeinrichtung wahlweise an einer der Sprossen und somit in Bezug auf die Hochrichtung des Kraftfahrzeugs in unterschiedlichen Höhen eingehakt werden. Hierdurch ist das Heckträgersystem auf besonders einfache Weise an eine Gesamtlänge des zu transportierenden Fahrrads anpassbar. Soll beispielsweise ein vergleichsweise kleines Kinderfahrrad transportiert werden, kann die Einhängeeinrichtung an einer in Hochrichtung des Kraftfahrzeugs unten liegenden Sprosse des Grundgestells eingehakt werden. Soll beispielsweise ein vergleichsweise langes Tandem transportiert werden, kann die Einhängeeinrichtung an einer in Hochrichtung des Kraftfahrzeugs oberen Sprosse des Grundgestells eingehakt werden.

In weiterer Ausgestaltung der Erfindung ist der Basisteil ein erster Rahmen mit einer U-förmigen Grundform. Dies erlaubt einen besonders einfachen Aufbau und reduzierte Herstellungskosten. Der erste Rahmen ist bei einer Ausgestaltung aus mehreren Rahmenprofilen zusammengefügt. Bei einer bevorzugten Ausgestaltung ist der erste Rahmen ein aus wenigstens einem Rohrabschnitt U-förmig gebogener Rohrrahmen.

In weiterer Ausgestaltung der Erfindung ist der Bügelteil ein zweiter Rahmen mit einer U-förmigen Grundform. Hierdurch können ein weiter vereinfachter Aufbau und nochmals reduzierte Herstellungskosten erreicht werden. Bei einer Ausgestaltung ist der zweite Rahmen aus mehreren Rahmenprofilen zusammengefügt. Bei einer bevorzugten Ausgestaltung ist der zweite Rahmen ein aus wenigstens einem Rohrabschnitt U-förmig gebogener Rohrrahmen.

In weiterer Ausgestaltung der Erfindung ist die Grundform des ersten Rahmens und/oder die Grundform des zweiten Rahmens derart unsymmetrisch, dass ein in die Einhängeeinrichtung eingehängtes Vorderrad einen Lenkeinschlag selbsttätig einnimmt. Die Erfinder haben erkannt, dass der besagte Lenkeinschlag zu einer besonders stabilen Aufnahme des Fahrrads an dem Heckträger führt. Durch den Lenkeinschlag kann das Fahrrad insbesondere in Querrichtung des Grundgestells verbessert an dem Bügelteil und/oder dem Basisteil abgestützt werden.

In weiterer Ausgestaltung der Erfindung ist der Bügelteil in der Funktionsstellung ausgehend von der Nichtgebrauchsstellung um die Schwenkachse entgegen der Schwerkraft nach oben aufgestellt. Hierbei bezieht sich die Richtungsangabe "nach oben" auf die Hochrichtung des Kraftfahrzeugs und/oder die Richtung des Erdschwerevektors. In der Nichtgebrauchsstellung ist der Bügelteil demnach nach unten an den Basisteil herangeschwenkt.

In weiterer Ausgestaltung der Erfindung ist die Schwenkachse an einem - in Bezug auf den Montagezustand - oberen Endbereich des Basisteils angeordnet. In Kombination mit einem Aufstellen des Bügelteils entgegen der Schwerkraft nach oben wird hierdurch eine besonders kompakte Bauweise der Einhängeeinrichtung erreicht.

In weiterer Ausgestaltung der Erfindung ist der Bügelteil in der Funktionsstellung ausgehend von der Nichtgebrauchsstellung um die Schwenkachse mit der Schwerkraft nach unten aufgestellt. Die Richtungsangabe "nach unten" bezieht sich wiederum auf den Montagezustand und insoweit auf die Hochrichtung des Kraftfahrzeugs und/oder die Richtung des Erdschwerevektors. Demnach ist der Bügelteil in der Nichtgebrauchsstellung nach oben an den Basisteil herangeschwenkt.

In weiterer Ausgestaltung der Erfindung ist die Schwenkachse an einem - in Bezug auf den Montagezustand - unteren Endbereich des Basisteils angeordnet. In Kombination mit einem Aufstellen des Bügelteils nach unten erlaubt eine solche Anordnung der Schwenkachse eine besonders kompakte Bauweise der Einhängeeinrichtung.

In weiterer Ausgestaltung der Erfindung ist der Bügelteil in der Funktionsstellung mittels wenigstens einer Druckstrebe, einer Lenkeranordnung mit mehreren Lenkern und/oder wenigstens einem Endanschlag an dem Basisteil abgestützt. Die Druckstrebe ist in der Funktionsstellung einends an dem Bügelteil und andernends an dem Basisteil abgestützt und - in eingehängtem Zustand des Fahrrads - auf Druck beansprucht. Eine solche Druckstrebe ist insbesondere in Kombination mit einem Aufstellen des Bügelteils entgegen der Schwerkraft nach oben vorteilhaft. Vorzugsweise ist die Druckstrebe in der Funktionsstellung einends um eine in Querrichtung orientierte Gelenkachse gelenkig mit dem Basisteil und/oder dem Bügelteil verbunden. An dem gegenüberliegenden anderen Ende ist die Druckstrebe lösbar mit dem verbleibenden Teil der Einhängeeinrichtung verbunden. Durch ein Lösen der besagten Verbindung kann die Druckstrebe einends gelöst und um die Gelenkachse an das Bügelteil und/oder das Basisteil herangeschwenkt werden. Die mehreren Lenker der Lenkeranordnung sind vorzugsweise jeweils einends an dem Bügelteil und andernends an dem Basisteil abgestützt. In der Funktionsstellung können die Lenker auf Zug und/oder auf Druck beansprucht sein. Vorzugsweise ist die Lenkeranordnung derart gestaltet, dass der Basisteil in der Nichtgebrauchsstellung gegen ein ungewolltes Verschwenken in die Funktionsstellung gehalten ist. Diese Halterung mittels der Lenkeranordnung kann manuell überwunden werden. Die Lenkeranordnung ist besonders vorteilhaft in Kombination mit einer nach unten gerichteten Verschwenkbarkeit des Bügelteils in die Funktionsstellung. Entsprechendes gilt sinngemäß für den Endanschlag. Dabei liegt der Bügelteil in der Funktionsstellung um die Schwenkachse formschlüssig an dem Endanschlag des Basisteils an.

In weiterer Ausgestaltung der Erfindung ist eine entlang der Aufnahmespur längserstreckte Radschiene vorhanden, wobei die Radschiene um eine im Wesentlichen in Querrichtung orientierte weitere Schwenkachse schwenkbeweglich an der Einhängeeinrichtung gelagert ist. Die Radschiene dient insbesondere einer Aufnahme des nicht in die Einhängeeinrichtung eingehängten, verbleibenden Rads des Fahrrads. Durch die gelenkbewegliche Lagerung an der Einhängeeinrichtung kann die Radschiene bei Nichtgebrauch des Heckträgersystems platzsparend an die Einhängeeinrichtung herangeschwenkt werden. Dies wenigstens dann, wenn die Einhängeeinrichtung von dem Grundgestell gelöst ist.

Die Erfindung betrifft zudem ein Grundgestell für ein Heckträgersystem gemäß der vorhergehenden Beschreibung. Das erfindungsgemäße Grundgestell weist eine leiterförmige Gestalt mit zwei in Längsrichtung längserstreckten Holmen und mehreren in Querrichtung zwischen den Holmen längserstreckten und in Längsrichtung voneinander beabstandet angeordneten Sprossen auf. Hierdurch werden ein besonders einfacher Aufbau des Grundgestells, eine einfache Montage an und Demontage von der Heckwand des Kraftfahrzeugs und zudem reduzierte Herstellungskosten erreicht. Zudem bietet das erfindungsgemäße Grundgestell besondere Vorteile, wenn die Einhängeeinrichtung des Heckträgersystems einen Hakenabschnitt zum lösbaren Einhaken an dem Grundgestell aufweist. Denn ein solches Einhaken ist besonders einfach an den erfindungsgemäß vorhandenen Sprossen des Grundgestells möglich.

Die Erfindung betrifft zudem eine Einhängeeinrichtung für ein Heckträgersystem mit einem Grundgestell, das zur vertikalen Montage an einer Heckwand eines Kraftfahrzeugs eingerichtet ist, und mit wenigstens einer an dem Grundgestell angeordneten in Längsrichtung längserstreckten Aufnahmespur, entlang derer ein zu transportierendes Fahrrad an dem Grundgestell aufnehmbar ist. Die erfindungsgemäße Einhängeeinrichtung weist einen lösbar mit dem Grundgestell des Heckträgersystems verbindbaren Basisteil und einen Bügelteil auf, der um eine im Wesentlichen in Querrichtung orientierte Schwenkachse schwenkbeweglich an dem Basisteil gelagert und relativ zu demselben beweglich ist zwischen einer Funktionsstellung, in welcher der Bügelteil zum Einhängen eines Vorder- oder Hinterrads des Fahrrads relativ zu dem Basisteil aufgestellt ist, und einer Nichtgebrauchsstellung, in welcher der Bügelteil kompakt an den Basisteil herangeschwenkt ist. Zu mit der erfindungsgemäßen Gestaltung der Einhängeeinrichtung einhergehenden Vorteilen wird auf die Beschreibung des erfindungsgemäßen Heckträgersystems verwiesen und ausdrücklich Bezug genommen. Das dort Gesagte gilt sinngemäß auch für die erfindungsgemäße Einhängeeinrichtung. Weitere Vorteile und Merkmale der Einhängeeinrichtung ergeben sich sinngemäß aus den Ausgestaltungen des erfindungsgemäßen Heckträgersystems.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in schematischer Perspektivdarstellung eine Ausführungsform eines erfindungsgemäßen Heckträgersystems mit einer Ausführungsform eines erfindungsgemäßen Grundgestells und einer Ausführungsform einer erfindungsgemäßen Einhängeeinrichtung,
- Fig. 2: in schematischer Perspektivdarstellung die Einhängeeinrichtung nach Fig. 1 in einer kompakt zusammengelegten Nichtgebrauchsstellung,
- Fig. 3: in schematischer Perspektivdarstellung die Einhängeeinrichtung nach Fig. 2 in einer Funktionsstellung,
- Fig. 4: in schematischer Perspektivdarstellung einen Hakenabschnitt der Einhängeeinrichtung,
- Fig. 5: in schematischer Perspektivdarstellung den Hakenabschnitt nach Fig. 4 in einem an einer Sprosse des Grundgestells eingehakten Zustand,
- Fig. 6, 7: jeweils in schematischer Perspektivdarstellung eine weitere Ausführungsform einer erfindungsgemäßen Einhängeeinrichtung in der Nichtgebrauchsstellung (Fig. 6) und der Funktionsstellung (Fig. 7),
- Fig. 8, 9: jeweils in schematischer Perspektivdarstellung eine weitere Ausführungsform einer erfindungsgemäßen Einhängeeinrichtung in der Nichtgebrauchsstellung (Fig. 8) und der Funktionsstellung (Fig. 9),
- Fig. 10: eine schematische Perspektivdarstellung zur weiteren Verdeutlichung der Funktion der Einhängeeinrichtung nach den Fig. 8 und 9,
- Fig. 11: in schematischer Perspektivdarstellung eine weitere Ausführungsform einer erfindungsgemäßen Einhängeeinrichtung mit einer aus- und anklappbaren Radschiene, wobei die Radschiene eine ausgeklappte Stellung einnimmt, und
- Fig. 12: in schematischer Perspektivdarstellung die Einhängeeinrichtung nach Fig. 11, wobei die Radschiene eine eingeklappte Stellung einnimmt.

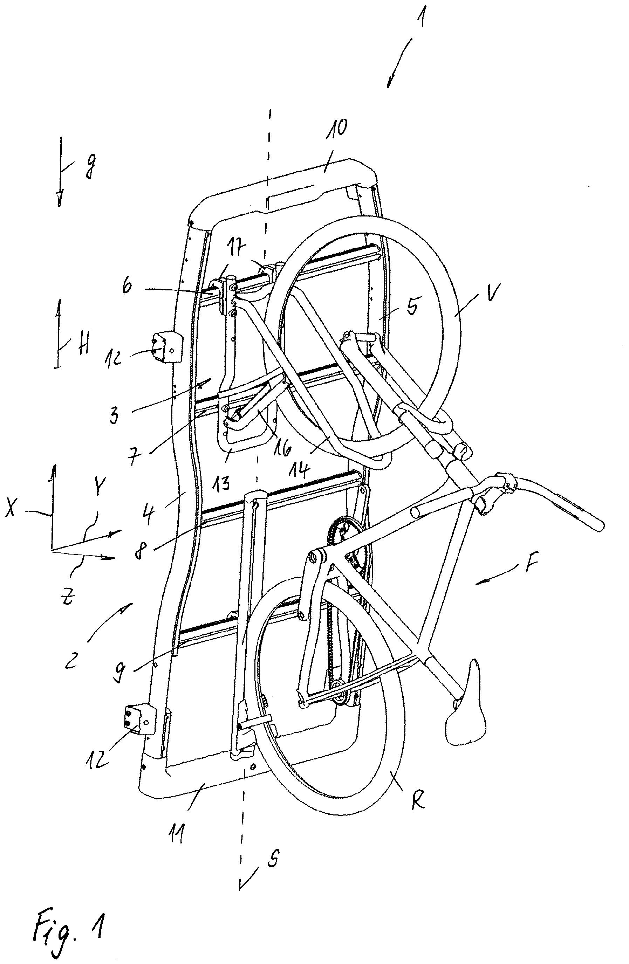

Gemäß Fig. 1 ist ein Heckträgersystem 1 zum Transport eines Fahrrads F vorgesehen und weist ein Grundgestell 2, eine Aufnahmespur S und eine Einhängeeinrichtung 3 auf.

Das Grundgestell 2 ist zur steil aufgestellten Montage an einer Heckwand eines nicht näher gezeigten Kraftfahrzeugs eingerichtet. Das Kraftfahrzeug kann beispielsweise ein Wohnmobil, ein Kleinbus oder ein Omnibus sein. In einem betriebsfertig an der Heckwand montierten Montagezustand ist eine Längsrichtung X des Grundgestells 2 vorliegend parallel zu einer Hochrichtung H des Kraftfahrzeugs und damit auch (anti-)parallel zur Orientierung des Erdschwerevektors g ausgerichtet. Je nachdem, ob die Heckwand des betreffenden Kraftfahrzeugs steil oder weniger steil ausgerichtet ist, ist auch das Grundgestell steil oder weniger steil ausgerichtet.

Bei der gezeigten Ausführungsform weist das Grundgestell 2 eine im weitesten Sinne leiterförmige Gestalt mit zwei in Längsrichtung X längserstreckten Holmen 4, 5 und mehreren in Querrichtung Y zwischen den Holmen 4, 5 längserstreckten und in Längsrichtung X voneinander beabstandet angeordneten Sprossen 6, 7, 8, 9 auf. Die Holme 4, 5 können auch als erster Holm 4 und zweiter Holm 5 bezeichnet werden. Dabei sind die Sprossen 6 bis 9 jeweils einends an dem ersten Holm 4 und andernends an dem zweiten Holm 5 festgelegt. Bei der gezeigten Ausführungsform weist das Grundgestell die insgesamt vier Sprossen 6 bis 9 auf, die auch als erste Sprosse 6, zweite Sprosse 7, dritte Sprosse 8 und vierte Sprosse 9 bezeichnet werden können. Bei einer zeichnerisch nicht dargestellten Ausführungsform weist das Grundgestell lediglich eine, zwei, drei oder mehr als die vorliegend gezeigten vier Sprossen auf.

Weiter weist das Grundgestell 2 vorliegend einen in Bezug auf die Längsrichtung X des Grundgestells 2 vorderen Querabschnitt 10 und einen hinteren Querschnitt 11 auf. Die Querabschnitte 10, 11 sind in Querrichtung Y jeweils einends an dem ersten Holm 4 und andernends an dem zweiten Holm 5 festgelegt.

Das Grundgestell 2 ist bei der gezeigten Ausführungsform symmetrisch in Bezug auf eine nicht näher bezeichnete Mittellängsebene. Dabei sind die beiden Holme 4,5 vorliegend jeweils in etwa im Bereich ihrer Längsmitte in Querrichtung Y geringfügig nach innen eingewölbt.

Weiter weist das Grundgestell 2 mehrere Befestigungsabschnitte 12 auf, die in dem Montagezustand, vorzugsweise lösbar, kraft- und/oder formschlüssig mit der Heckwand verbunden sind. Anhand Fig. 1 sind lediglich zwei der vorliegend insgesamt vier Befestigungsabschnitte 12 gezeigt. Dabei sind die Befestigungsabschnitte 12 jeweils paarweise an dem ersten Holm 4 und an dem zweiten Holm 5 angeordnet.

Die Aufnahmespur S ist entlang der Längsrichtung X an dem Grundgestell 2 angeordnet und im allgemeinen Fall als eine Spur im geometrischen Sinne zu verstehen, entlang derer das Fahrrad F an dem Grundgestell 2 aufnehmbar ist. Wie anhand Fig. 1 gezeigt ist, ist eine nicht näher bezeichnete, zwischen einem Vorderrad V und einem Hinterrad R gebildete Spur des Fahrrads F im aufgenommenen Zustand des Fahrrads F koaxial zu der Aufnahmespur S ausgerichtet. Mit einfachen Worten ausgedrückt, sind das Vorderrad V und das Hinterrad R entlang der Aufnahmespur S an dem Grundgestell 2 aufgenommen. In dem vorliegenden Montagezustand ist die Aufnahmespur S parallel zur Hochrichtung H des Kraftfahrzeugs und damit auch parallel zur Ausrichtung des Erdschwerevektors g orientiert. Demnach ist das Fahrrad F zum Transport entlang seiner Längsrichtung vertikal oder jedenfalls steil aufgestellt. Bei einer zeichnerisch nicht dargestellten Ausführungsform weist das Grundgestell mehrere parallel erstreckte Aufnahmespuren auf, so dass mehrere Fahrräder transportiert werden können. In diesem Fall sind dementsprechend mehrere Einhängeeinrichtungen vorhanden, wobei jeweils eine der Einhängeeinrichtungen einer der Aufnahmespuren zugeordnet ist.

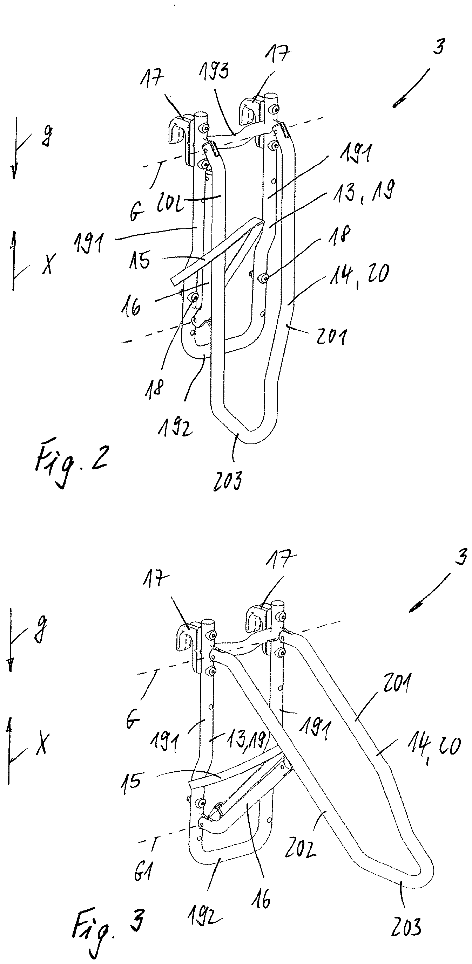

Die Einhängeeinrichtung 3 ist zur Aufnahme des Vorderrads V und/oder des Hinterrads R eingerichtet. Vorliegend ist das Vorderrad V in und/oder an der Einhängeeinrichtung aufgenommen, genauer: in diese eingehängt. Die Einhängeeinrichtung 3 ist auf noch näher beschriebene Weise lösbar mit dem Grundgestell 2 verbunden und weist einen Basisteil 13 und einen Bügelteil 14 auf (siehe Fig. 2, 3). Der Basisteil 13 ist lösbar mit dem Grundgestell 2 verbunden. Der Bügelteil 14 ist um eine Schwenkachse G schwenkbeweglich an dem Basisteil 13 gelagert. Bei der gezeigten Ausführungsform ist die Schwenkachse G parallel zur Querrichtung Y orientiert. Der Bügelteil 14 ist relativ zu dem Basisteil 13 um die Schwenkachse G zwischen einer Nichtgebrauchsstellung (Fig. 2) und einer Funktionsstellung verlagerbar (Fig. 1, 3). In der Nichtgebrauchsstellung ist der Bügelteil 14 um die Schwenkachse G kompakt an den Basisteil 13 herangeschwenkt. In der Funktionsstellung ist der Bügelteil 14 zum Einhängen des Vorderrads V relativ zu dem Basisteil 13 um die Schwenkachse G schwenkbeweglich aufgestellt. Sofern der Heckträger 1 nicht in Gebrauch ist, kann der Raumbedarf in Hochrichtung Z des Grundgestells - und damit in Längsrichtung des Kraftfahrzeugs - durch ein Heranklappen des Bügelteils 14 in die Nichtgebrauchsstellung verringert werden. In der Funktionsstellung ist der Bügelteil 14 in Längsrichtung des Kraftfahrzeugs nach hinten ausgestellt. Der Bügelteil 14 bildet in der Funktionsstellung eine Art Rinne, Korb, Schale oder dergleichen, in welche das Vorderrad V formschlüssig eingehängt werden kann. Das Vorderrad V und damit das gesamte Fahrrad F ist hierdurch entgegen dem Erdschwerevektor g formschlüssig an der Einhängeeinrichtung 3 festgelegt.

Zur Sicherung des Vorderrads V gegen ein ungewolltes Herausbewegen aus dem aufgeklappten Bügelteil 14 weist die Einhängeeinrichtung 3 vorliegend ein Rastband 15 auf. Die grundsätzliche Funktion und Gestaltung des Rastbands 15 sind dem Fachmann bekannt. Weitere diesbezügliche Erläuterungen sind damit entbehrlich.

Bei der Einhängeeinrichtung 3 nach den Fig. 1 bis 3 wird der Bügelteil 14 zur Verlagerung in Richtung der Funktionsstellung entgegen dem Erdschwerevektor g nach oben aufgeklappt. Mit anderen Worten ausgedrückt, wird der Bügelteil 14 in Hochrichtung H des Kraftfahrzeugs nach oben und damit in Längsrichtung X des Grundgestells 2 nach vorne aufgeklappt. Dabei ist die Schwenkachse G in einem in Bezug auf die Längsrichtung X vorderen und in Bezug auf die Hochrichtung H oberen Endbereich des Basisteils 13 und/oder Bügelteils 14 angeordnet.

Zur Sicherung des Bügelteils 14 in der Funktionsstellung ist wenigstens eine Druckstrebe 16 vorhanden. Die Druckstrebe 16 ist in der Funktionsstellung einends, vorzugsweise gelenkig, an dem Basisteil 13 und andernends an dem Bügelteil 14, vorzugsweise lösbar, abgestützt. Die Druckstrebe 16 kann auch als Koppelstange bezeichnet werden. Zur Verlagerung des Bügelteils 14 in die Nichtgebrauchsstellung kann die Druckstrebe 16 auf nicht näher gezeigte Weise, beispielsweise mittels eines Druckbolzens, von dem Bügelteil 14 gelöst werden. Hiernach kann die Druckstrebe 16 um eine weitere Schwenkachse G1 an den Basisteil 13 herangeschwenkt werden. In der herangeschwenkten Stellung ist die Druckstrebe 16 kompakt auf den Basisteil 13 aufgelegt (Fig. 2), so dass der Bügelteil relativ zu dem Basisteil 13 um die Schwenkachse G freigegeben und an den Basisteil 13 herangeschwenkt werden kann. Bei der gezeigten Ausführungsform ist die weitere Schwenkachse G1 der Druckstrebe 16 parallel zu der Schwenkachse G orientiert.

In der Nichtgebrauchsstellung dient das Rastband 15 vorliegend zudem einer Sicherung des Bügelteils 14 und der Druckstrebe 16 gegen eine ungewollte Bewegung in Richtung der Funktionsstellung.

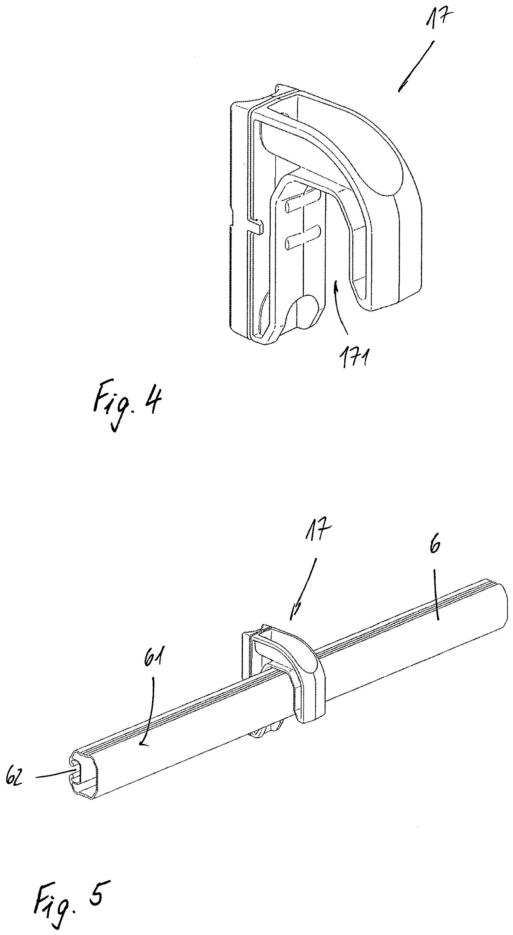

Zur lösbaren Verbindung der Einhängeeinrichtung 3 mit dem Grundgestell 2 weist der Basisteil 13 vorliegend wenigstens einen Hakenabschnitt 17 auf. Der Hakenabschnitt 17 ist fest mit dem Basisteil 13 verbunden und an einem hierfür vorgesehenen Abschnitt des Grundgestells 2 formschlüssig einhakbar (Fig. 1, 5). In einem mit dem Grundgestell 2 verbundenen Zustand der Einhängeeinrichtung 3 ist der Hakenabschnitt 17 in Hochrichtung H von oben nach unten - und damit in Längsrichtung X von vorne nach hinten - an einer der Sprossen 6 bis 9 eingehakt. Vorliegend ist ein Einhaken an der ersten Sprosse 6 vorgesehen. Die Sprossen 6 bis 9 und im Speziellen die erste Sprosse 6 weist eine Außenkontur 61 auf, die auf eine Innenkontur 171 des Hakenabschnitts 17 abgestimmt ist. Die Außenkontur 61 ist im Wesentlichen rechteckig, die Innenkontur 171 ist hierzu komplementär rechteckig und einends zum Einhaken auf die Außenkontur 61 offen.

Zur zusätzlichen Fixierung des Hakenabschnitts 17 an der ersten Sprosse 6 kann eine Schraub-, Klemm-, Rast- und/oder sonstige lösbare Verbindung vorgesehen sein.

Vorliegend weist die erste Sprosse 6 in einem in Bezug auf die Zeichenebene der Fig. 5 rückwärtigen Bereich eine durchgängig in Längsrichtung der Sprosse 6 erstreckte Formschlussnut 62 auf. In diese Formschlussnut 62 kann ein dem Hakenabschnitt 17 zugeordnetes Formschlusselement formschlüssig zur Sicherung des Hakenabschnitts 17 an der ersten Sprosse 6 eingebracht werden.

Bei der gezeigten Ausführungsform weist die Einhängeeinrichtung 3 zwei in Querrichtung Y voneinander beabstandet an dem Basisteil 13 befestigte Hakenabschnitte 17 auf. Beide Hakenabschnitte 17 sind in dem Montagezustand (Fig. 1) an der ersten Sprosse eingehakt. Zudem ist der Basisteil 13 vorliegend in Hochrichtung Z des Grundgestells 2 auf der zweiten Sprosse 7 abgestützt. Zur zusätzlichen Sicherung des Basisteils 13 an der zweiten Sprosse 7 kann eine lösbare Verbindung zwischen dem Basisteil 13 und der zweiten Sprosse 7 vorhanden sein. Bei der gezeigten Ausführungsform weist die Einhängeeinrichtung 3 hierfür zwei dem Basisteil 13 zugeordnete Befestigungsschrauben 18 auf, die auf nicht näher gezeigte Weise mit der zweiten Sprosse 7 lösbar verschraubt sind.

Bei der Einhängeeinrichtung 3 nach den Fig. 1 bis 3 sind der Basisteil 13 und der Bügelteil 14 jeweils als Rahmen mit U-förmiger Grundform ausgeführt. Der Basisteil 13 kann insoweit auch als erster Rahmen 19 bezeichnet werden. Der Bügelteil 14 kann als zweiter Rahmen 20 bezeichnet werden. Vorliegend sind sowohl der erste Rahmen 19 als auch der zweite Rahmen 20 als gebogene Rohrkonstruktion aus einem rohrförmigen Halbzeug mit kreiszylindrischem Hohlquerschnitt gefertigt. Eine solche Fertigung ist vorteilhaft, aber nicht zwingend. Beide Rahmen 19, 20 sind bügelförmig und weisen die besagte U-förmige Grundform auf.

Im Speziellen weist der erste Rahmen 19 zwei in Querrichtung Y voneinander beabstandet und parallel längserstreckte Längsabschnitte 191 auf. Die Längsabschnitte 191 sind einends mit einem Querabschnitt 192 miteinander verbunden. Der Querabschnitt 192 ist parallel zur Querrichtung Y zwischen den beiden Längsabschnitten 191 längserstreckt. Die Hakenabschnitte 17 sind jeweils an einem dem Querabschnitt 192 abgewandten Ende des jeweiligen Längsabschnitts 191 angeordnet und fest mit demselben verschraubt. Weiter weist der erste Rahmen 13 vorliegend einen Versteifungsabschnitt 193 auf, der in Querrichtung Y im Bereich der Hakenabschnitte 17 und damit auch im Bereich der Gelenkachse G zwischen den beiden Längsabschnitten 191 längserstreckt ist und dieselben miteinander verbindet.

Der zweite Rahmen 20 weist einen ersten Längsabschnitt 201, einen zweiten Längsabschnitt 202 und einen Querabschnitt 203 auf. Der erste Längsabschnitt 201 und der zweite Längsabschnitt 202 sind in Querrichtung Y gegenüberliegend angeordnet und mittels des Querabschnitts 203 einends miteinander verbunden. Andernends sind die beiden Längsabschnitte 201, 202 über die Schwenkachse G schwenkbeweglich an dem Basisteil 13 angelenkt.

Wie insbesondere anhand der Fig. 2 und 3 gezeigt ist, ist die U-förmige Grundform des zweiten Rahmens 20 in Bezug auf eine nicht näher bezeichnete Mittellängsebene unsymmetrisch. Diese unsymmetrische Gestaltung bewirkt, dass das Vorderrad V in eingehängtem Zustand selbsttätig einen Lenkeinschlag einnimmt. Dies ist anhand Fig. 1 gezeigt. Der Lenkeinschlag des Vorderrads V bewirkt eine verbesserte Übertragung von Kräften zwischen dem Vorderrad V und der Einhängeeinrichtung 3, so dass eine besonders stabile Aufnahme des Fahrrads F an dem Heckträger 1 erreicht werden kann. Die hierfür ursächliche unsymmetrische Gestaltung des zweiten Rahmens 20 wird durch eine unterschiedliche Gestaltung der Längsabschnitte 201, 202 und durch eine nicht symmetrische Krümmung des Querabschnitts 203 erreicht. Dabei ist die anhand der Fig. 1 bis 3 ersichtliche unsymmetrische Formgebung des zweiten Rahmens 20 als rein exemplarisch zu verstehen. Selbstverständlich kann auch mittels hierzu unterschiedlicher unsymmetrischer Formgebungen ein selbsttätiger Lenkeinschlag des Vorderrads V erreicht werden.

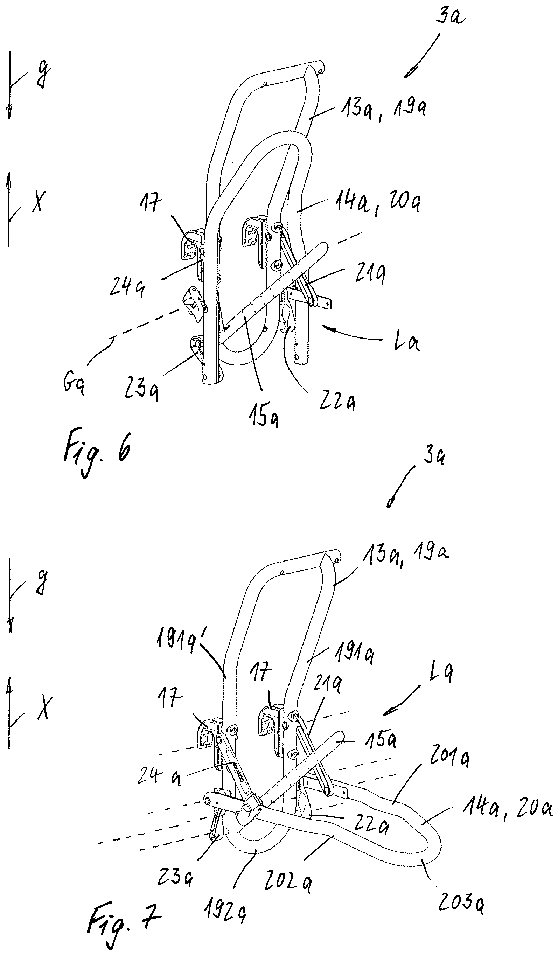

Anhand der Fig. 6 bis 12 sind weitere Ausführungsformen erfindungsgemäßer Einhängeeinrichtungen 3a, 3b, 3c gezeigt. Die Einhängeeinrichtungen 3a, 3b, 3c sind hinsichtlich ihrer grundsätzlichen Funktion und Gestaltung im Wesentlichen identisch zu der Einhängeeinrichtung 3 nach den Fig. 1 bis 3. Die Einhängeeinrichtungen 3a, 3b, 3c können anstelle der Einhängeeinrichtung 3 zusammen mit dem Grundgestell 2 verwendet werden. Zur Vermeidung von Wiederholungen werden nachfolgend lediglich wesentliche Unterschiede der Einhängeeinrichtungen 3a, 3b, 3c gegenüber der Einhängeeinrichtung 3 erläutert. Zwischen den Einhängeeinrichtungen 3, 3a, 3b, 3c grundsätzlich übereinstimmende Merkmale werden nicht gesondert erläutert. Stattdessen wird für solche Merkmale auf das zu der Einhängeeinrichtung 3 Gesagte verwiesen und ausdrücklich Bezug genommen. Im Übrigen sind funktionsgleiche Bauteile und/oder Abschnitte mit übereinstimmenden Bezugszeichenziffern und unter Hinzufügung eines jeweiligen Kleinbuchstabens gekennzeichnet.

Die Einhängeeinrichtung 3a nach den Fig. 6 und 7 unterscheidet sich im Wesentlichen durch eine Lenkeranordnung La mit mehreren Lenkern 21a bis 24a von der Einhängeeinrichtung 3. Zudem ist der Bügelteil 14a mit der Schwerkraft in Richtung der Funktionsstellung aufklappbar. Mit anderen Worten ausgedrückt, ist der Bügelteil 14a ausgehend von der Nichtgebrauchsstellung in Längsrichtung X nach hinten und somit in Hochrichtung H nach unten in die Funktionsstellung schwenkbeweglich.

Die Lenkeranordnung La dient der schwenkbeweglichen Anlenkung des Bügelteils 14a an dem Basisteil 13a. Die Lenkeranordnung La weist die besagten mehreren Lenker 21a bis 24a auf, die auch als erster Lenker 21a, zweiter Lenker 22a, dritter Lenker 23a und vierter Lenker 24a bezeichnet werden können. Die Lenker 21a bis 24a sind jeweils einends an dem Basisteil 13a und andernends an dem Bügelteil 14a um nicht näher bezeichnete Schwenkachsen angelenkt. Diese nicht näher bezeichneten Schwenkachsen der Lenker 21a bis 24a sind in Fig. 7 strichliert eingezeichnet. Die Lenkeranordnung La ermöglicht eine Schwenkbeweglichkeit des Bügelteils 14a um eine resultierende Schwenkachse Ga, die in Fig. 6 strichliert eingezeichnet ist. Die Schwenkachse Ga ist in Übereinstimmung mit der Schwenkachse G der Einhängeeinrichtung 3 parallel zur Querrichtung Y orientiert. Die exakte räumliche Anordnung der Schwenkachse Ga in Fig. 6 in Relation zu dem Basisteil 13a und dem Bügelteil 14a ist als rein exemplarisch zu verstehen. Die räumliche Anordnung der Schwenkachse Ga wird durch die Kinematik der Lenkeranordnung La definiert.

Die Hakenabschnitte 17 sind im Bereich einer nicht näher bezeichneten Längsmitte des Basisteils 14a angeordnet. Der Basisteil 14a bildet wiederum einen ersten Rahmen 20a mit einem ersten Längsabschnitt 191a und einem zweiten Längsabschnitt 191a'. Im Unterschied zu dem ersten Rahmen 19 der Einhängeeinrichtung 3 nach den Fig. 1 bis 3 sind die Längsabschnitte 191a, 191a' unterschiedlich ausgeformt. Dies resultiert in einer unsymmetrischen Grundform des ersten Rahmens 19a. Diese unsymmetrische Grundform des ersten Rahmens 19a unterstützt den bereits erläuterten selbsttätigen Lenkeinschlag des Vorderrads V. Im Übrigen ist der Bügelteil 14a ebenfalls unsymmetrisch gestaltet.

Bei der gezeigten Ausführungsform ist die Lenkeranordnung La derart gestaltet, dass der Bügelteil 14a jeweils gegen eine ungewollte Verlagerung sowohl in der Nichtgebrauchs- als auch in der Funktionsstellung gehalten ist. Die besagte Halterung ist manuell überwindbar. Diese Funktion der Lenkeranordnung La wird durch eine spezielle, anhand der Figuren ersichtliche Gestaltung der Lenkeranordnung La erreicht.

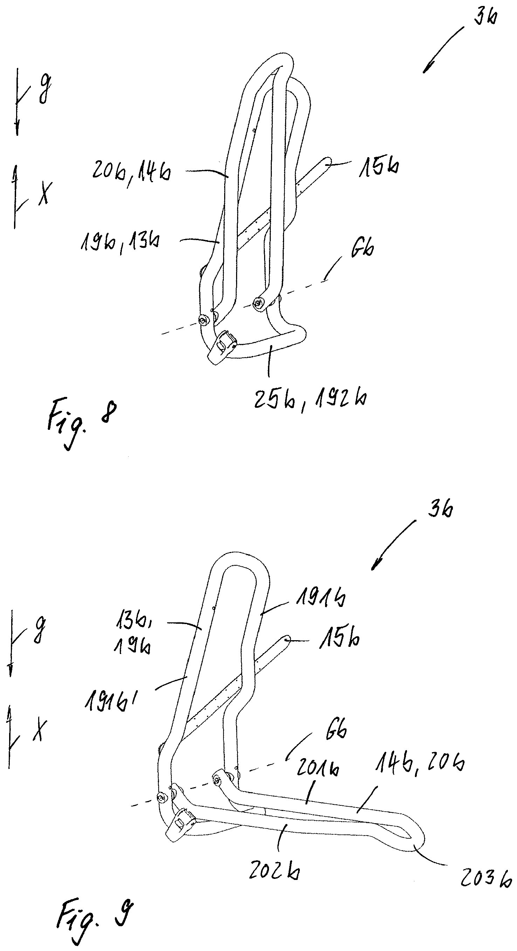

Die Einhängeeinrichtung 3b nach den Fig. 8 bis 10 unterscheidet sich im Wesentlichen durch ihren vergleichsweise einfachen Aufbau von den vorhergehend erläuterten Einhängeeinrichtungen 3, 3a. Wesentlicher Unterschied gegenüber der Einhängeeinrichtung 3 ist, dass der Bügelteil 14b ausgehend von der Nichtgebrauchsstellung von vorne nach hinten und damit von oben nach unten in die Funktionsstellung verschwenkbar ist. Dabei ist die Schwenkachse Gb an einem in Bezug auf die Längsrichtung X hinteren und damit in Bezug auf die Hochrichtung H unteren Bereich des Basisteils 13b angeordnet.

Um ein über die Funktionsstellung hinausgehendes Verschwenken des Bügelteils 14b zu verhindern, weist der Basisteil 13b einen Endanschlag 25b auf. Der Endanschlag 25b bildet ein unteres Stirnende des Basisteils 13b und wirkt in der Funktionsstellung um die Schwenkachse Gb formschlüssig mit dem Bügelteil 14b zusammen.

Sowohl der Basisteil 13b als auch der Bügelteil 14b sind wiederum als erster Rahmen 19b bzw. zweiter Rahmen 20b gestaltet. Dabei bildet der Endanschlag 25b einen Querabschnitt 192b des ersten Rahmens 13b.

Zur lösbaren Verbindung mit dem Grundgestell 2 kann der Basisteil 13b beispielsweise mit einer oder mehreren der Sprossen 6 bis 9 verschraubt werden. Alternativ oder zusätzlich kann der Basisteil 13b mit wenigstens einem Hakenabschnitt 17 ausgestattet werden.

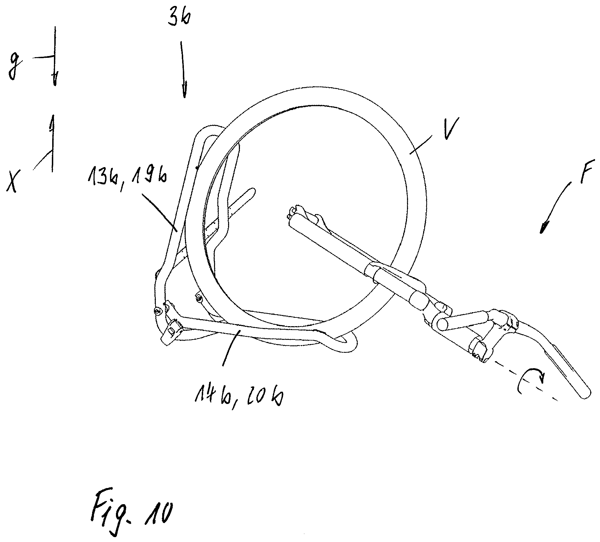

Wie anhand Fig. 10 verdeutlicht ist, bewirkt die unsymmetrische Gestaltung des Basisteils 13b und des Bügelteils 14b wiederum einen selbsttätigen Lenkeinschlag des Vorderrads V.

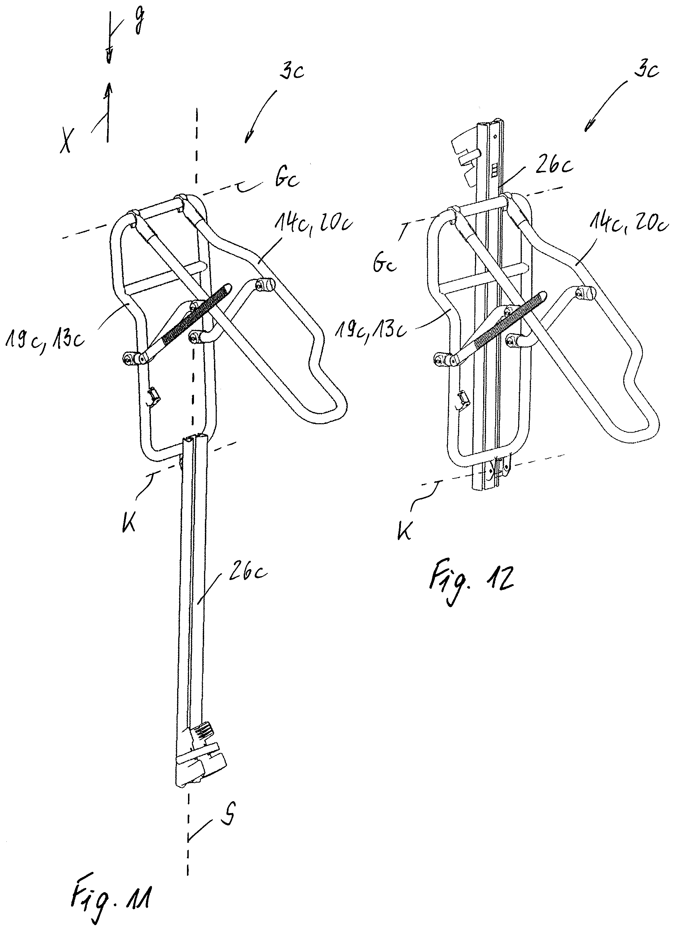

Die Einhängeeinrichtung 3c nach den Fig. 11 bis 12 unterscheidet sich im Wesentlichen durch eine gelenkig an- und ausklappbare Radschiene 26c von den vorhergehend erläuterten Einhängeeinrichtungen 3, 3a, 3b. Die Radschiene 26c ist um eine weitere Schwenkachse, die auch als Klappachse K bezeichnet werden kann, klappbeweglich mit dem Basisteil 13c verbunden. Die Klappachse K ist parallel zur Querrichtung Y orientiert. Die Klappachse K ist an einem nicht näher bezeichneten unteren Stirnendbereich des Basisteils 13c angeordnet. Die Radschiene 26c ist in ihrer ausgeklappten Stellung (Fig. 11) in Längsrichtung X und somit auch in Hochrichtung H längserstreckt. Die Radschiene 26c definiert jedenfalls einen Abschnitt der Aufnahmespur S. Die Aufnahmespur S und die Radschiene 26c sind jedenfalls abschnittsweise koaxial orientiert. Bei der gezeigten Ausführungsform dient die Radschiene 26c einer in Querrichtung Y formschlüssigen Aufnahme des Hinterrads R. Bei einem Nichtgebrauch der Einhängeeinrichtung 3c kann die Radschiene 26c um die Klappachse K an den Basisteil 13c herangeklappt werden. Hierdurch kann der Raumbedarf bei Nichtgebrauch verringert werden. Hinsichtlich der Gestaltung der Einhängeeinrichtung 3c im Übrigen gilt sinngemäß das bereits zu den Einhängeeinrichtungen 3, 3a, 3b Gesagte. Dabei versteht sich, dass die klappbare Radschiene 26c ohne weiteres mit den Einhängeeinrichtungen 3, 3a, 3b kombinierbar ist.

## Patentansprüche

1. Heckträgersystem (1) zum Transport wenigstens eines Fahrrads (F), aufweisend
ein Grundgestell (2), das zur vertikalen Montage an einer Heckwand eines Kraftfahrzeugs eingerichtet ist,
wenigstens eine an dem Grundgestell (2) angeordnete in Längsrichtung (X) längserstreckte Aufnahmespur (S), entlang derer das zu transportierende Fahrrad (F) an dem Grundgestell (2) aufnehmbar ist,
und aufweisend wenigstens eine an dem Grundgestell (2) angeordnete Einhängeeinrichtung (3, 3a, 3b, 3c), die zum Einhängen eines Vorder- oder Hinterrads (V, R) des wenigstens einen Fahrrads (F) entlang der Aufnahmespur (S) eingerichtet ist,
**dadurch gekennzeichnet, dass** die Einhängeeinrichtung (3, 3a, 3b, 3c) einen lösbar mit dem Grundgestell (2) verbundenen Basisteil (13, 13a, 13b, 13c) und einen Bügelteil (14, 14a, 14b, 14c) aufweist, der um eine im Wesentlichen in Querrichtung orientierte Schwenkachse (G, Ga, Gb, Gc) schwenkbeweglich an dem Basisteil (13, 13a, 13b, 13c) gelagert und relativ zu demselben beweglich ist zwischen einer Funktionsstellung, in welcher der Bügelteil (14, 14a, 14b, 14c) zum Einhängen des Vorder- oder Hinterrads (V, R) relativ zu dem Basisteil (13, 13a, 13b, 13c) aufgestellt ist, und einer Nichtgebrauchsstellung, in welcher der Bügelteil (14, 14a, 14b, 14c) kompakt an den Basisteil (13, 13a, 13b, 13c) herangeschwenkt ist.

2. Heckträgersystem (1) nach Anspruch 1, **dadurch gekennzeichnet, dass** der Basisteil (13, 13a, 13b, 13c) wenigstens einen Hakenabschnitt (17) aufweist, mittels dessen die Einhängeeinrichtung (3, 3a, 3b, 3c) an einem hierfür vorgesehenen Abschnitt des Grundgestells (2) - in Bezug auf den Montagezustand - entgegen der Schwerkraft (g) formschlüssig lösbar einhakbar ist.

3. Heckträgersystem (1) nach Anspruch 2, **dadurch gekennzeichnet, dass** das Grundgestell (2) wenigstens eine in Querrichtung (Y) längserstreckte Sprosse (6, 7, 8, 9) aufweist, an deren Außenumfang (61) der Hakenabschnitt (17) lösbar einhakbar ist.

4. Heckträgersystem (1) nach einem der vorhergehenden Ansprüche, **dadurch gekennzeichnet, dass** der Basisteil (13, 13a, 13b, 13c) ein erster Rahmen (19, 19a, 19b, 19c) mit einer U-förmigen Grundform ist.

5. Heckträgersystem (1) nach einem der vorhergehenden Ansprüche, **dadurch gekennzeichnet, dass** der Bügelteil (14, 14a, 14b, 14c) ein zweiter Rahmen (20, 20a, 20b, 20c) mit einer U-förmigen Grundform ist.

6. Heckträgersystem (1) nach Anspruch 4 oder 5, **dadurch gekennzeichnet, dass** die Grundform des ersten Rahmens (19a, 19b) und/oder die Grundform des zweiten Rahmens (20, 20a, 20b, 20c) derart unsymmetrisch ist, dass ein in die Einhängeeinrichtung (3, 3a, 3b, 3c) eingehängtes Vorderrad (V) einen Lenkeinschlag selbsttätig einnimmt.

7. Heckträgersystem (1) nach einem der vorhergehenden Ansprüche, **dadurch gekennzeichnet, dass** der Bügelteil (14, 14c) in der Funktionsstellung ausgehend von der Nichtgebrauchsstellung um die Schwenkachse (G, Gc) entgegen der Schwerkraft (g) nach oben aufgestellt ist.

8. Heckträgersystem (1) nach Anspruch 7, **dadurch gekennzeichnet, dass** die Schwenkachse (G, Gc) an einem - in Bezug auf den Montagezustand - oberen Endbereich des Basisteils (13, 13c) angeordnet ist.

9. Heckträgersystem (1) nach einem der Ansprüche 1 bis 6, **dadurch gekennzeichnet, dass** der Bügelteil (14a, 14b) in der Funktionsstellung ausgehend von der Nichtgebrauchsstellung um die Schwenkachse (Ga, Gb) mit der Schwerkraft (g) nach unten aufgestellt ist.

10. Heckträgersystem (1) nach Anspruch 9, **dadurch gekennzeichnet, dass** die Schwenkachse (Ga, Gb) an einem - in Bezug auf den Montagezustand - unteren Endbereich des Basisteils (13a, 13b) angeordnet ist.

11. Heckträgersystem (1) nach einem der vorhergehenden Ansprüche, **dadurch gekennzeichnet, dass** der Bügelteil (14, 14a, 14b, 14c) in der Funktionsstellung mittels wenigstens einer Druckstrebe (16), einer Lenkeranordnung (La) mit mehreren Lenkern (21a bis 24a) und/oder wenigstens einem Endanschlag (25b) an dem Basisteil (13, 13a, 13b, 13c) abgestützt ist.

12. Heckträgersystem (1) nach einem der vorhergehenden Ansprüche, **dadurch gekennzeichnet, dass** eine entlang der Aufnahmespur (S) längserstreckte Radschiene (26c) vorhanden ist, wobei die Radschiene (26c) um eine im Wesentlichen in Querrichtung (Y) orientierte weitere Schwenkachse (K) schwenkbeweglich an der Einhängeeinrichtung (3, 3a, 3b, 3c) gelagert ist.

13. Grundgestell (2) für ein Heckträgersystem (1) nach einem der vorhergehenden Ansprüche, **dadurch gekennzeichnet, dass** das Grundgestell (2) eine leiterförmige Gestalt mit zwei in Längsrichtung (X) längserstreckten Holmen (4, 5) und mehreren in Querrichtung (Y) zwischen den Holmen (4, 5) längserstreckten und in Längsrichtung (X) voneinander beabstandet angeordneten Sprossen (6 bis 9) aufweist.

14. Einhängeeinrichtung (3, 3a, 3b, 3c) für ein Heckträgersystem (1) mit einem Grundgestell (2), das zur vertikalen Montage an einer Heckwand eines Kraftfahrzeugs eingerichtet ist, und mit wenigstens einer an dem Grundgestell (2) angeordneten, in Längsrichtung (X) längserstreckten Aufnahmespur (S), entlang derer ein zu transportierendes Fahrrad (F) an dem Grundgestell (2) aufnehmbar ist, **dadurch gekennzeichnet, dass** die Einhängeeinrichtung (3, 3a, 3b, 3c) einen lösbar mit dem Grundgestell (2) des Heckträgersystems (1) verbindbaren Basisteil (13, 13a, 13b, 13c) und einen Bügelteil (14, 14a, 14b, 14c) aufweist, der um eine im Wesentlichen in Querrichtung (Y) orientierte Schwenkachse (G, Ga, Gb, Gc) schwenkbeweglich an dem Basisteil (13, 13a, 13b, 13c) gelagert und relativ zu demselben beweglich ist zwischen einer Funktionsstellung, in welcher der Bügelteil (14, 14a, 14b, 14c) zum Einhängen eines Vorder- oder Hinterrads (V, R) des Fahrrads (F) relativ zu dem Basisteil (13, 13a, 13b, 13c) aufgestellt ist, und einer Nichtgebrauchsstellung, in welcher der Bügelteil (14, 14a, 14b, 14c) kompakt an den Basisteil (13, 13a, 13b, 13c) herangeschwenkt ist.
